# EUROPEAN PATENT APPLICATION

(11) **EP 4 447 385 A1**
(43) Date of publication of application: **16.10.2024**
(21) Application number: 22915114.7
(22) Date of filing: 29.12.2022
(51) Int. Cl.: H04L 9/40

(54) **SECURE TRANSMISSION METHOD AND APPARATUS**

(30) Priority: 31.12.2021 CN 202111670362
(71) Applicant: Huawei Technologies Co., Ltd., Shenzhen, Guangdong 518129 (CN)
(72) Inventor: TANG, Hongshan, Shenzhen, Guangdong 518129 (CN); MA, Ning, Shenzhen, Guangdong 518129 (CN); LI, Mingzhen, Shenzhen, Guangdong 518129 (CN); FANG, Chenyuan, Shenzhen, Guangdong 518129 (CN)
(74) Representative: Körber, Martin Hans
(86) International application number: PCT/CN2022/143624
(87) International publication number: WO 2023/125865

(57) **Abstract**

Embodiments of this application provide a secure transmission method and an apparatus. The method includes: A first device encrypts a packet header of a to-be-sent packet according to a transport layer security protocol to obtain an encrypted packet header. The to-be-sent packet includes first data. The first data is encrypted by an application layer security protocol but is not encrypted by the transport layer security protocol. The first device sends a first encrypted packet to a second device. The first encrypted packet includes the encrypted packet header and the first data. According to this application, if the to-be-sent packet includes the first data encrypted by the application layer security protocol, when encrypting the to-be-sent packet according to the transport layer security protocol, the first device encrypts the packet header of the to-be-sent packet, but does not encrypt the first data. Accordingly, after receiving an encrypted packet, the second device does not need to decrypt the first data according to the transport layer security protocol. Therefore, processing load of the first device and the second device can be reduced, and packet transmission efficiency can be improved.

## Description

This application claims priority to Chinese Patent Application No. 202111670362.8, filed with the China National Intellectual Property Administration on December 31, 2021 and entitled "SECURE TRANSMISSION METHOD AND APPARATUS", which is incorporated herein by reference in its entirety.

### TECHNICAL FIELD

Embodiments of this application relate to the secure communication field, and more specifically, to a secure transmission method and an apparatus.

### BACKGROUND

Before sending a packet to a second device, a first device encrypts the to-be-sent packet according to a transport layer security protocol to obtain an encrypted packet, and adds a cyclic redundancy check (cyclic redundancy check, CRC) sequence to the encrypted packet. Correspondingly, after receiving the encrypted packet, the second device performs a CRC check on the encrypted packet, and decrypts the encrypted packet according to the transport layer security protocol. If an error occurs during transmission of the encrypted packet, the second device first corrects the encrypted packet. For example, during enhanced common public radio interface (enhanced common public radio interface, eCPRI)-based packet transmission in Ethernet, the second device may correct the encrypted packet using base (base) forward error correction (forward error correction, FEC) or Reed-Solomon (Reed-Solomon, RS) FEC. After correcting the encrypted packet, the second device performs the CRC check on the encrypted packet, and decrypts the encrypted packet according to the transport layer security protocol.

During each packet transmission, the first device and the second device respectively encrypt and decrypt a transmitted packet according to the transport layer security protocol. This raises a relatively high requirement on hardware processing capabilities of the first device and the second device, and packet transmission efficiency is low.

### SUMMARY

Embodiments of this application provide a secure transmission method, to reduce the processing load of a device and improve packet transmission efficiency.

According to a first aspect, a secure transmission method is provided. The method includes: A first device encrypts a packet header of a to-be-sent packet according to a transport layer security protocol to obtain an encrypted packet header. The to-be-sent packet includes first data. The first data is encrypted by an application layer security protocol but is not encrypted by the transport layer security protocol. The first device sends a first encrypted packet to a second device. The first encrypted packet includes the encrypted packet header and the first data.

According to the foregoing technical solution, if the to-be-sent packet includes the first data encrypted by the application layer security protocol, when encrypting the to-be-sent packet according to the transport layer security protocol, the first device encrypts the packet header of the to-be-sent packet, but does not encrypt the first data. Correspondingly, after receiving an encrypted packet, the second device does not need to decrypt the first data according to the transport layer security protocol. Therefore, processing load of the first device and the second device can be reduced, and packet transmission efficiency can be improved.

In addition, because the packet header occupies a small proportion in the entire to-be-sent packet, the encrypted packet header occupies a small proportion in the first encrypted packet. Further, because a length of the encrypted packet header is short, the encrypted packet header is less error-prone during transmission, and further it is less likely that the second device fails to decrypt the encrypted packet header according to the transport layer security protocol. Therefore, a probability that the second device discards the first data resulting from decryption failure is reduced. Therefore, the foregoing technical solution can improve an error resilience capability of a link between the first device and the second device can be improved on the basis of secure transmission. If the first data is air interface data, spectrum utilization of an air interface can be improved when a probability of discarding the first data decreases.

For example, the application layer security protocol includes a packet data convergence protocol (packet data convergence protocol, PDCP) layer protocol.

For example, the transport layer security protocol includes a media access control security (media access control security, MACSec) protocol and an internet protocol security (internet protocol security, IPsec) protocol.

For example, the first data is the air interface data. For example, the first data is data received by the first device from a terminal device. For another example, the first data is data received by the first device from a third device, and the first data is data sent to a terminal device. The third device is configured to generate the first data or is configured to forward the first data. For example, the third device is a source device that transmits data or a routing device that connects a destination device and the source device in Ethernet. For another example, the third device is a core network device.

For example, the first device is a source device for packet transmission or a routing device that connects the source device and a destination device in Ethernet, the destination device is a destination device for packet transmission in the Ethernet, and the second device is the destination device or a routing device that connects the source device and the destination device.

With reference to the first aspect, in some implementations of the first aspect, the method further includes: The first device sends length information of the packet header of the to-be-sent packet to the second device.

According to the foregoing technical solution, the first device sends the length information of the packet header to the second device, so that the second device can correctly decrypt the encrypted packet header based on the length information. For example, if a length of the packet header of the to-be-sent packet is not fixed, the first device sends the length information of the packet header to the second device, so that the second device can correctly decrypt the encrypted packet header based on the length information.

With reference to the first aspect, in some implementations of the first aspect, the to-be-sent packet further includes second data that is not encrypted by the application layer security protocol, the first encrypted packet further includes encrypted data, and the method further includes: The first device encrypts the second data according to the transport layer security protocol to obtain the encrypted data.

According to the foregoing technical solution, when the to-be-sent packet includes the second data that is not encrypted by the application layer security protocol, the first device encrypts the second data according to the transport layer security protocol, so that secure transmission of the second data between the first device and the second device can be ensured.

For example, the second data includes control data, management plane data, or synchronization clock data transmitted on a fronthaul interface.

With reference to the first aspect, in some implementations of the first aspect, the second data is located before the first data.

According to the foregoing technical solution, when the to-be-sent packet includes the packet header, the second data, and the first data, the packet header is located at a front end of the to-be-sent packet, and the second data is located before the first data, so that the first device may encrypt both the packet header and the second data according to the transport layer security protocol. Therefore, a procedure in which the first device encrypts the to-be-sent packet can be simplified.

With reference to the first aspect, in some implementations of the first aspect, the method further includes: The first device sends length information of the second data to the second device.

According to the foregoing technical solution, the first device sends the length information of the second data to the second device, so that the second device can correctly decrypt the encrypted data based on the length information. For example, if a length of the second data is not fixed, the first device sends the length information of the second data to the second device, so that the second device can correctly decrypt the encrypted data based on the length information.

With reference to the first aspect, in some implementations of the first aspect, before the first encrypted packet is generated, the method further includes: The first device receives a second encrypted packet from the second device; and the first device performs an integrity check on the second encrypted packet according to the transport layer security protocol, where the check fails.

For example, that the integrity check performed by the first device on the second encrypted packet fails is the first time the integrity check performed on the packet received from the second device fails.

For another example, that the integrity check performed by the first device on the second encrypted packet fails is an N^{th} time the integrity check performed on the packet received from the second device fails, where N is a positive integer, and N is a preset threshold.

With reference to the first aspect, in some implementations of the first aspect, before the first encrypted packet is generated, the method further includes: The first device sends a third encrypted packet to the second device, where the third encrypted packet is generated by encrypting the to-be-sent packet according to the transport layer security protocol; and the first device receives indication information from the second device, where the indication information indicates that the integrity check on the third encrypted packet fails.

For example, the first device receives the indication information from the second device for the first time.

For another example, the first device receives the indication information from the second device for the N^{th} time, where N is a positive integer, and N is a preset threshold.

According to a second aspect, a secure transmission method is provided, and the method includes: A second device receives an encrypted packet from a first device, where the encrypted packet includes an encrypted packet header and first data, and the first data is encrypted by an application layer security protocol but is not encrypted by a transport layer security protocol; and the second device decrypts the encrypted packet header according to the transport layer security protocol.

According to the foregoing technical solution, if the first data included in the encrypted packet received by the second device is encrypted by the application security protocol and is not decrypted by the transport layer security protocol, the second device does not need to decrypt the first data according to the transport layer security protocol, thereby reducing processing load of the second device. In addition, the packet transmission efficiency is improved.

For example, the application layer security protocol includes: a PDCP layer protocol.

For example, the transport layer security protocol includes: a MACSec protocol and an IPsec protocol.

For example, the first data is air interface data. For example, the first data is data received by the first device from a terminal device. For another example, the first data is data received by the first device from a third device, and the first data is data sent to a terminal device. The third device is configured to generate the first data or is configured to forward the first data. For example, the third device is a source device that transmits data or a routing device that connects a destination device and the source device in Ethernet. For another example, the third device is a core network device.

For example, the first device is a source device for packet transmission or a routing device that connects the source device and a destination device in the Ethernet, the destination device is a destination device for packet transmission in the Ethernet, and the second device is the destination device or a routing device that connects the source device and the destination device.

Alternatively, if the second device successfully decrypts the encrypted packet header, the second device sends the first data to the third device. A fourth device is a destination device that transmits data or a routing device that connects the destination device and a source device in the Ethernet. Alternatively, the fourth device is a terminal device or a core network device. For example, the second device is a radio frequency device, and the fourth device is a terminal device. Alternatively, the second device is a control device, and the fourth device is a core network device.

With reference to the second aspect, in some implementations of the second aspect, the method further includes: The second device receives first length information from the first device; and the second device determines, based on the first length information, a length of the encrypted packet header before being encrypted.

According to the foregoing technical solution, the second device determines, based on the first length information, the length of the encrypted packet header before being encrypted, so that the second device can correctly decrypt the encrypted packet header based on the first length information. For example, if the length of the packet header is not fixed, the first device sends the first length information to the second device, so that the second device can correctly decrypt the encrypted packet header based on the first length information.

With reference to the second aspect, in some implementations of the second aspect, the encrypted packet further includes encrypted data, and the method further includes: The second device decrypts the encrypted data according to the transport layer security protocol to obtain second data.

For example, the second data includes control data, management plane data, or synchronization clock data transmitted on a fronthaul interface.

With reference to the second aspect, in some implementations of the second aspect, the method further includes: The second device receives second length information from the first device; and the second device determines a length of the second data based on the second length information.

According to the foregoing technical solution, the second device determines the length of the second data based on the second length information, so that the second device can correctly decrypt the encrypted data based on the second length information, to obtain the second data. For example, if the length of the second data is not fixed, the first device sends the second length information to the second device, so that the second device can correctly decrypt the encrypted data based on the second length information.

According to a third aspect, an apparatus is provided. The apparatus includes a transceiver unit and a processing unit. The processing unit is configured to encrypt a packet header of a to-be-sent packet according to a transport layer security protocol to obtain an encrypted packet header. The to-be-sent packet includes first data. The first data is encrypted by an application layer security protocol but is not encrypted by the transport layer security protocol. The transceiver unit is configured to send a first encrypted packet, where the first encrypted packet includes the encrypted packet header and the first data.

For example, the application layer security protocol includes: a PDCP layer protocol.

For example, the transport layer security protocol includes: a MACSec protocol and an IPsec protocol.

For example, the first data is air interface data. For example, the first data is data received by the apparatus from a terminal device. For another example, the first data is data received by the apparatus from a third device, and the first data is data sent to a terminal device. The third device is configured to generate the first data or is configured to forward the first data. For example, the third device is a source device that transmits data or a routing device that connects a destination device and the source device in Ethernet. For another example, the third device is a core network device.

For example, the apparatus is a source device for packet transmission or a routing device that connects the source device and a destination device in the Ethernet, the destination device is a destination device for packet transmission in the Ethernet, and the second device is the destination device or a routing device that connects the source device and the destination device.

With reference to the third aspect, in some implementations of the third aspect, the transceiver unit is further configured to send length information of the packet header of the to-be-sent packet to the second device.

With reference to the third aspect, in some implementations of the third aspect, the to-be-sent packet further includes second data that is not encrypted by the application layer security protocol, the first encrypted packet further includes encrypted data, and the processing unit is further configured to encrypt the second data according to the transport layer security protocol to obtain the encrypted data.

For example, the second data includes control data, management plane data, or synchronization clock data transmitted on a fronthaul interface.

With reference to the third aspect, in some implementations of the third aspect, the second data is located before the first data.

With reference to the third aspect, in some implementations of the third aspect, the transceiver unit is further configured to send length information of the second data to the second device.

With reference to the third aspect, in some implementations of the third aspect, the transceiver unit is further configured to receive a second encrypted packet from the second device. The processing unit is further configured to perform an integrity check on the second encrypted packet according to the transport layer security protocol, where the check fails.

With reference to the third aspect, in some implementations of the third aspect, the transceiver unit is further configured to send a third encrypted packet to the second device. The third encrypted packet is generated by encrypting the to-be-sent packet according to the transport layer security protocol. The transceiver unit is further configured to receive indication information from the second device, where the indication information indicates that the integrity check on the third encrypted packet fails.

According to a fourth aspect, an apparatus is provided. The apparatus includes a transceiver unit and a processing unit. The transceiver unit is configured to receive an encrypted packet from a first device, the encrypted packet includes an encrypted packet header and first data, and the first data is encrypted by an application layer security protocol but is not encrypted by a transport layer security protocol. The processing unit is configured to decrypt the encrypted packet header according to the transport layer security protocol.

For example, the application layer security protocol includes: a PDCP layer protocol.

For example, the transport layer security protocol includes: a MACSec protocol and an IPsec protocol.

For example, the first data is air interface data. For example, the first data is data received by the first device from a terminal device. For another example, the first data is data received by the first device from a third device, and the first data is data sent to a terminal device. The third device is configured to generate the first data or is configured to forward the first data. For example, the third device is a source device that transmits data or a routing device that connects a destination device and the source device in Ethernet. For another example, the third device is a core network device.

For example, the first device is a source device for packet transmission or a routing device that connects the source device and a destination device in the Ethernet, the destination device is a destination device for packet transmission in the Ethernet, and the apparatus is the destination device or the routing device that connects the source device and the destination device.

With reference to the fourth aspect, in some implementations of the fourth aspect, the transceiver unit is further configured to receive first length information from the first device. The processing unit is further configured to determine, based on the first length information, a length of the encrypted packet header before being encrypted.

With reference to the fourth aspect, in some implementations of the fourth aspect, the encrypted packet further includes encrypted data, and the processing unit is further configured to decrypt the encrypted data according to the transport layer security protocol to obtain second data.

For example, the second data includes control data, management plane data, or synchronization clock data transmitted on a fronthaul interface.

With reference to the fourth aspect, in some implementations of the fourth aspect, the transceiver unit is further configured to receive second length information from the first device. The processing unit is further configured to determine a length of the second data based on the second length information.

According to a fifth aspect, this application provides an apparatus, including a processor. The processor is coupled to a memory, to execute instructions in the memory, to implement the method according to any one of the first aspect and the possible implementations of the first aspect. The apparatus further includes the memory. The apparatus further includes a communication interface, and the processor is coupled to the communication interface.

In an implementation, the apparatus is a first device. When the apparatus is the first device, the communication interface may be a transceiver or an input/output interface.

In another implementation, the apparatus is a chip or a chip system configured in a first device. When the apparatus is a chip or a chip system configured in a first device, the communication interface may be an input/output interface.

The transceiver may be a transceiver circuit. The input/output interface may be an input/output circuit.

According to a sixth aspect, this application provides an apparatus, including a processor. The processor is coupled to a memory, to execute instructions in the memory, to implement the method according to any one of the second aspect and the possible implementations of the second aspect. The apparatus further includes the memory. The apparatus further includes a communication interface, and the processor is coupled to the communication interface.

In an implementation, the apparatus is a second device. When the apparatus is a second device, the communication interface may be a transceiver or an input/output interface.

In another implementation, the apparatus is a chip or a chip system configured in a second device. When the apparatus is a chip or a chip system configured in a second device, the communication interface may be an input/output interface.

The transceiver may be a transceiver circuit. The input/output interface may be an input/output circuit.

According to a seventh aspect, this application provides a processor, including: an input circuit, an output circuit, and a processing circuit. The processing circuit is configured to receive a signal through the input circuit and transmit a signal through the output circuit, so that the processor performs the method according to the foregoing aspects.

In a specific implementation process, the processor may be a chip, the input circuit may be an input pin, the output circuit may be an output pin, and the processing circuit may be a transistor, a gate circuit, a flip-flop, various logic circuits, or the like. The input signal received by the input circuit may be received and input by, for example, but not limited to, a receiver. The signal output by the output circuit may be, for example, but not limited to, output to and transmitted by a transmitter. In addition, the input circuit and the output circuit may be a same circuit. The circuit is used as the input circuit or the output circuit at different times. Specific implementations of the processor and various circuits are not limited in embodiments of this application.

According to an eighth aspect, this application provides a processing apparatus, including a communication interface and a processor. The communication interface is coupled to the processor. The communication interface is configured to input and/or output information. The information includes at least one of instructions or data. The processor is configured to execute a computer program, so that the processing apparatus performs the method according to the foregoing aspects.

According to a ninth aspect, this application provides a processing apparatus, including a processor and a memory. The processor is configured to read instructions stored in the memory, receive a signal through a receiver, and transmit a signal through a transmitter, so that the processing apparatus performs the method according to the foregoing aspects.

Alternatively, there are one or more processors. If there is a memory, there may be one or more memories.

Alternatively, the memory may be integrated with the processor, or the memory and the processor may be disposed separately.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

It should be understood that in a related information exchange process, for example, sending indication information may be a process of outputting the indication information from the processor, and receiving the indication information may be a process of inputting the received indication information to the processor. Specifically, information outputted by the processor may be output to the transmitter, and input information received by the processor may be from the receiver. The transmitter and the receiver may be collectively referred to as a transceiver.

The apparatuses according to the eighth aspect and the ninth aspect may be chips, and the processor may be implemented through hardware or software. When being implemented through the hardware, the processor may be a logic circuit, an integrated circuit, or the like. When being implemented through the software, the processor may be a general-purpose processor, and is implemented by reading software code stored in the memory. The memory may be integrated into the processor, or may exist independently outside the processor.

According to a tenth aspect, this application provides a computer program product. The computer program product includes a computer program (which may also be referred to as code or instructions). When the computer program is run, the computer is enabled to perform the method according to the foregoing aspects.

According to an eleventh aspect, this application provides a computer-readable storage medium. The computer-readable storage medium stores a computer program (which may also be referred to as code or instructions). When the computer program is run on a computer, the computer is enabled to perform the method according to the foregoing aspects.

According to a twelfth aspect, this application provides a system, including the foregoing first device and second device.

### BRIEF DESCRIPTION OF DRAWINGS

FIG. 1 is a schematic diagram of a system applicable to a method according to an embodiment of this application;
FIG. 2 is a schematic flowchart of a method according to an embodiment of this application;
FIG. 3 is a schematic diagram of generating a to-be-sent packet by a first device;
FIG. 4 is a schematic diagram of a format of a to-be-sent packet;
FIG. 5 is a schematic block diagram of an apparatus according to an embodiment of this application;
FIG. 6 is a schematic diagram of a structure of an apparatus according to an embodiment of this application; and
FIG. 7 is a schematic diagram of a chip system according to an embodiment of this application.

### DESCRIPTION OF EMBODIMENTS

The following describes technical solutions in embodiments of this application with reference to accompanying drawings.

The technical solutions in embodiments of this application may be applied to various communication systems, for example, a long term evolution (long term evolution, LTE) system, a frequency division duplex (frequency division duplex, FDD), a time division duplex (time division duplex, TDD) system, a worldwide interoperability for microwave access (worldwide interoperability for microwave access, WiMAX) communication system, a 5^{th} generation (5^{th} generation, 5G) system, a new radio (new radio, NR), a 6^{th} generation (6^{th} generation, 6G) system, a future communication system, or the like. The 5G mobile communication system in this application includes a non-standalone (non-standalone, NSA) 5G mobile communication system or a standalone (standalone, SA) 5G mobile communication system. The communication system may also be a public land mobile network (public land mobile network, PLMN), a device-to-device (device-to-device, D2D) communication system, a machine to machine (machine to machine, M2M) communication system, an internet of things (internet of things, IoT) communication system, a vehicle to everything (vehicle to everything, V2X) communication system, an uncrewed aerial vehicle (uncrewed aerial vehicle, UAV) communication system, or another communication system.

In the description of this application, unless otherwise specified, "/" indicates that associated objects are in an "or" relationship. For example, A/B may represent A or B. In this application, "and/or" is merely an association relationship for describing associated objects, and indicates that three relationships may exist. For example, A and/or B may indicate: Only A exists, both A and B exist, and only B exists. A and B may be singular or plural. In addition, in the description of this application, unless otherwise specified, "a plurality of" means two or more. "At least one of the following items (pieces)"or a similar expression thereof indicates any combination of these items, including a single item (piece) or any combination of a plurality of items (pieces). For example, at least one of a, b, or c may represent: a, b, c, a-b, a-c, b-c, or a-b-c, where a, b, and c may be one or more.

In addition, to clearly describe the technical solutions in embodiments of this application, terms such as "first" and "second" are used to distinguish between same objects or similar objects whose functions and purposes are basically the same, in embodiments of this application. A person skilled in the art may understand that the terms such as "first" and "second" do not limit a quantity or an execution sequence, and the terms such as "first" and "second" do not indicate a definite difference. In addition, in embodiments of this application, words such as "example" or "for example" are used to represent an example or a description. Any embodiment or design solution described as "for example" in embodiments of this application should not be interpreted as being more preferred or advantageous than another embodiment or design solution. Specifically, the use of words such as "for example" is intended to present a correlation probability in a concrete manner for ease of understanding.

In addition, the network architecture and the service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the network architecture evolves and a new service scenario emerges.

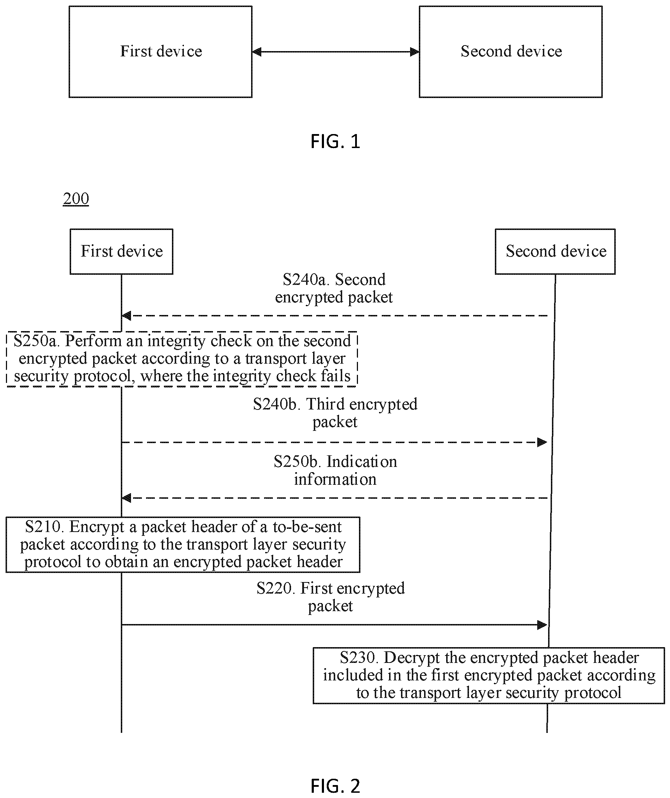

For ease of understanding of embodiments of this application, an application scenario of embodiments of this application is first described in detail with reference to FIG. 1.

FIG. 1 is an architecture of a system applicable to a method according to an embodiment of this application. As shown in FIG. 1, the system includes a first device and a second device. The first device and the second device are devices that can transmit a packet in Ethernet. For example, the first device may be a source device for packet transmission or a routing device that connects the source device and a destination device in the Ethernet, and the second device may be the destination device for packet transmission or the routing device that connects the source device and the destination device in the Ethernet. For example, the first device is a source device, and the second device is a destination device. Alternatively, the first device is a source device, and the second device is a routing device. Alternatively, the first device is a routing device, and the second device is a destination device. Alternatively, both the first device and the second device are routing devices.

For example, the source device may be a control device for packet transmission based on an enhanced common public radio interface (enhanced common public radio interface, eCPRI) protocol in the Ethernet, the destination device may be a radio frequency device for packet transmission based on the eCPRI protocol in the Ethernet, and the routing device may be an extension device for packet transmission based on the eCPRI protocol in the Ethernet. Alternatively, the source device may be a radio frequency device for packet transmission based on an eCPRI protocol in the Ethernet, and the destination device may be a control device for packet transmission based on the eCPRI protocol in the Ethernet. For example, the eCPRI protocol is a protocol defined in an eCPRI specification (specification) V2.0.

The control device may serve as a main device of a base station, process a digital baseband signal, and provide control and management for functions of devices of the base station. The radio frequency device may serve as a radio frequency module of the base station, configured to process an intermediate frequency signal and/or a radio frequency signal, or receive and transmit a radio signal. Alternatively, the radio frequency device may be configured to process the baseband digital signal, for example, perform fast Fourier transform (fast Fourier transform, FFT) on the baseband digital signal. The extension device is configured to provide functions of data aggregation and distribution for communication between the control device and the radio frequency device. For example, in an uplink direction, the extension device receives uplink signals from the radio frequency device, performs radio frequency combination on the received uplink signals, and sends the received uplink signals to the control device. For another example, in a downlink direction, the extension device receives downlink signals sent by the control device, and sends the downlink signals to all connected radio frequency devices.

It should be noted that, specific types of the control device, the extension device, and the radio frequency device are not limited in an embodiment of this application. For example, the control device may be any one of the following: a baseband unit (baseband unit, BBU or BU), a distributed unit (distributed unit, DU), or a central unit (central unit, CU). The extension device may be any of the following: a switch (switch), a router (router), an LAN switch (LAN switch, LSW), or a radio remote unit hub (radio remote unit hub, rHUB). The radio frequency device may be any one of the following: a radio remote unit (radio remote unit, RRU), a radio unit (radio unit, RU), an active antenna unit (active antenna unit, AAU), and a pico radio remote unit (pico radio remote unit, pRRU).

In some deployments, the control device may include a central unit (central unit, CU) and a DU. The DU is connected to the extension device through an optical fiber. Further, the CU may use an architecture in which a control plane (control plane, CP) and a user plane (user plane, UP) are separated. In other words, the CU may include a CU-CP entity and a CU-UP entity.

For another example, the source device may be a DU that transmits a packet based on the enhanced common public radio interface (enhanced common public radio interface, eCPRI) protocol in the Ethernet, and the destination device may be a CU that transmits a packet based on the eCPRI protocol in the Ethernet. Alternatively, the source device may be a CU that transmits a packet based on the eCPRI protocol in the Ethernet, and the destination device may be a DU that transmits a packet based on the eCPRI protocol in the Ethernet. The CU implements some functions of the base station, and the DU implements some functions of the base station. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a medium access control (medium access control, MAC) layer, and a physical (physical, PHY) layer.

For another example, the source device may be an integrated access and backhaul (integrated access and backhaul, IAB) node (node) that transmits data in the Ethernet. The destination device may be an IAB donor (donor) that transmits a packet in the Ethernet. The routing device may be an IAB node that transmits a packet in the Ethernet. Alternatively, the source device may be an IAB donor that transmits a packet in the Ethernet, and the destination device may be an IAB node that transmits a packet in the Ethernet.

Before sending a packet to the second device, the first device encrypts a to-be-sent packet according to a transport layer security protocol to obtain an encrypted packet, and adds a cyclic redundancy check (cyclic redundancy check, CRC) sequence to the encrypted packet. Correspondingly, after receiving the encrypted packet, the second device performs a CRC check on the encrypted packet, and decrypts the encrypted packet according to the transport layer security protocol. If an error occurs on a transmission process of the encrypted packet, the second device first corrects the encrypted packet. For example, in a packet transmission process based on the eCPRI protocol in the Ethernet, the second device may correct the encrypted packet through base (base) forward error correction (forward error correction, FEC) or Reed-Solomon (Reed-Solomon, RS) FEC. After correcting the encrypted packet, the second device performs the CRC check on the encrypted packet, and decrypts the encrypted packet according to the transport layer security protocol.

In each packet transmission process, the first device and the second device encrypt and decrypt a transmitted packet according to the transport layer security protocol. In this case, a relatively high requirement is imposed on a hardware processing capability of the first device and the second device, and packet transmission efficiency is low.

In view of this, embodiments of this application provide a secure transmission method, to reduce processing load of the first device and the second device, and improve packet transmission efficiency.

FIG. 2 is a schematic flowchart of the secure transmission method according to an embodiment of this application. As shown in FIG. 2, a method 200 may include S210 to S230.

S210. A first device encrypts a packet header of a to-be-sent packet according to a transport layer security protocol to obtain an encrypted packet header.

For more descriptions of the first device, refer to FIG. 1.

The to-be-sent packet includes the packet header and first data. The first data is encrypted by an application layer security protocol but is not encrypted by the transport layer security protocol. For example, the first data is data generated by the first device, and the first data is data sent to a terminal device. For another example, the first data is data received by the first device from a terminal device. For another example, the first data is data received by the first device from a third device, and the first data is data sent to a terminal device. The third device is configured to generate the first data or is configured to forward the first data. For example, the third device is a source device that transmits data or a routing device that connects a destination device and the source device in Ethernet. For another example, the third device is a core network device.

For example, the transport layer security protocol includes a media access control security (media access control security, MACSec) protocol and an internet protocol security (internet protocol security, IPsec) protocol, a transport layer security (transport layer security, TLS) protocol and a secure socket layer (secure socket layer, SLL) protocol. The application layer security protocol includes a packet data convergence protocol (packet data convergence protocol, PDCP) layer protocol.

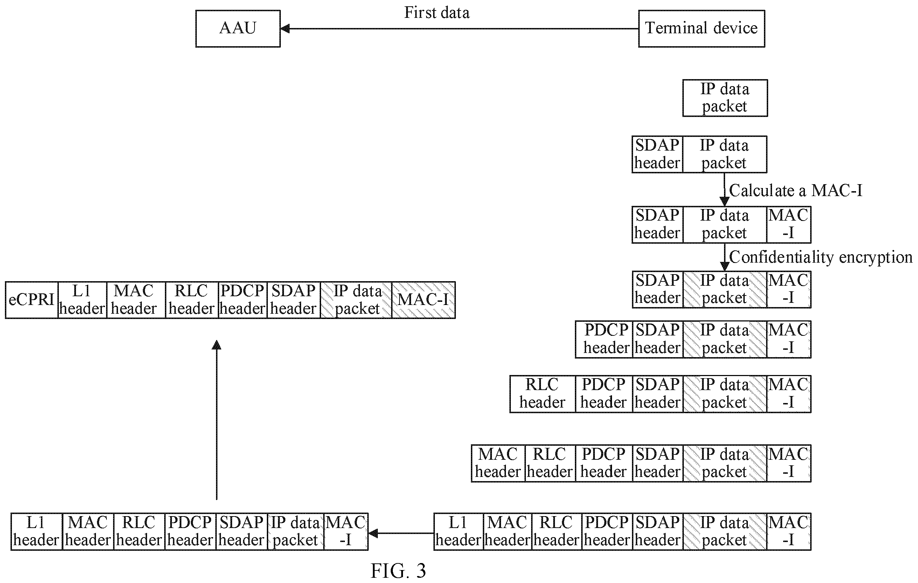

With reference to FIG. 3, the following describes a process in which the first device generates the to-be-sent packet with an example in which the first data is the data received by the first device from the terminal device.

As shown in FIG. 3, after receiving an IP data packet (packet) from an internet protocol (internet protocol, IP) layer, a service data adaptation protocol (service data adaptation protocol, SDAP) entity of the terminal device uses the IP data packet as an SDAP service data unit (service data unit, SDU). Further, the SDAP entity of the terminal device obtains an SDAP protocol data unit (protocol data unit, PDU) after adding an SDAP header to the SDAP SDU according to an SDAP layer protocol. Further, the SDAP entity of the terminal device sends the SDAP PDU to a PDCP entity of the terminal device.

After receiving the SDAP PDU, the PDCP entity of the terminal device uses the SDAP PDU as the PDCP SDU, and performs integrity protection on a part of the PDCP SDU other than the SDAP header according to the PDCP layer protocol. A manner in which the PDCP entity of the terminal device performs integrity protection on the PDCP SDU according to the PDCP layer protocol is: The PDCP entity, based on a first integrity protection algorithm and a first integrity protection key configured by an upper layer (for example, a radio resource control (radio resource control, RRC) layer), calculates a message authentication code for integrity (message authentication code for integrity, MAC-I), and concatenates the MAC-I at a tail of the PDCP SDU. Further, the PDCP entity performs confidentiality encryption on the part of the PDCP SDU other than the SDAP header according to the PDCP layer protocol. A manner in which the PDCP entity of the terminal device performs confidentiality encryption on the PDCP SDU according to the PDCP layer protocol is: The PDCP entity performs the confidentiality encryption on the PDCP SDU based on a first confidentiality protection algorithm and a first confidentiality protection key that are configured by an upper layer (for example, the RRC layer). Further, the PDCP entity of the terminal device adds a PDCP header to the encrypted packet to obtain a PDCP PDU, and sends the PDCP PDU to a radio link control (radio link control, RLC) entity of the terminal device.

Alternatively, the PDCP entity of the terminal device may further perform network coding on the PDCP PDU, for example, perform the network coding on the PDCP PDU based on low density parity check code (low density parity check code, LDPC).

After receiving the PDCP PDU, the RLC entity of the terminal device uses the PDCP PDU as an RLC SDU, and adds an RLC header to the RLC SDU according to an RLC layer protocol to obtain an RLC PDU. Further, the RLC entity of the terminal device sends the RLC PDU to a media access control (media access control, MAC) entity of the terminal device. After receiving the RLC PDU, the MAC entity of the terminal device uses the RLC PDU as a MAC SDU, and adds a MAC header to the MAC SDU according to a MAC layer protocol to obtain a MAC PDU. Further, after adding an L1 header to the MAC PDU according to a layer 1 (layer 1, L1) protocol, the terminal device obtains first data that can be transmitted in an air interface, and sends the first data to an AAU by using the air interface.

It should be noted that, in FIG. 3, only an example in which the PDCP entity performs integrity protection and the confidentiality encryption on the part of the PDCP SDU other than the SDAP header is used for description. For example, the PDCP entity of the terminal device may perform the integrity protection and the confidentiality encryption on all parts included in the PDCP SDU. For another example, the PDCP entity of the terminal device may perform the integrity protection or the confidentiality encryption on the PDCP SDU.

It should also be noted that, in FIG. 3, that the transport layer security protocol is a PDCP layer protocol is used as an example. In a future communication system, that the transport layer security protocol may be an SDAP layer protocol, an RLC layer protocol, or the like is not limited in an embodiment of this application.

Further, as shown in FIG. 3, after receiving the first data from the terminal device, the AAU encapsulates the first data according to the eCPRI protocol to obtain the to-be-sent packet.

After generating the to-be-sent packet, the first device encrypts the packet header of the to-be-sent packet according to the transport layer security protocol. That the first device encrypts a packet header of the to-be-sent packet according to the transport layer security protocol includes: The first device performs confidentiality encryption on the packet header of the to-be-sent packet according to the transport layer security protocol, and/or the first device performs integrity protection on the to-be-sent packet according to the transport layer security protocol.

That the first device performs the integrity protection on the packet header of the to-be-sent packet according to the transport layer security protocol includes: The first device performs the integrity protection on the packet header of the to-be-sent packet based on a second integrity protection algorithm and a second integrity protection key. The second integrity protection algorithm is an integrity protection algorithm defined by the transport layer security protocol. If the transport layer security protocol defines a plurality of integrity protection algorithms, the first device and the second device may negotiate a used second integrity protection algorithm. For example, the first device and the second device negotiate the used second integrity protection algorithm according to the following steps: Step 1: The first device sends, to the second device, at least one integrity protection algorithm supported by the first device. Step 2: The second device selects, from the at least one integrity protection algorithm supported by the first device, an integrity protection algorithm supported by the second device, and uses the selected integrity protection algorithm as the second integrity protection algorithm. Step 3: The second device sends the second integrity protection algorithm to the first device. A second integrity protection key is an integrity protection key defined by the transport layer security protocol. The second integrity protection key is a preconfigured key, or a key generated by the first device and the second device through negotiation. For example, if the first device encrypts the packet header of the to-be-sent packet according to the MACSec protocol, the first device and the second device may negotiate the second integrity protection key according to a MACSec key agreement (MACSec key agreement, MKA) protocol. Specifically, the first device and the second device discover, according to the MKA protocol, that both the first device and the second device have a same connectivity association key (connectivity association key, CAK). Then, the first device and the second device generate an integrity check value key (integrity check value key, ICK) based on a same key algorithm, the same CAK, and a same random number. The ICK is the second integrity protection key.

For example, that the first device performs integrity protection on the packet header of the to-be-sent packet based on the second integrity protection algorithm and the second integrity protection key includes: The first device obtains a first integrity check value (integrity check value, ICV) through calculation based on the second integrity protection algorithm, the second integrity protection key, and the packet header of the to-be-sent packet, and places the first ICV at a tail of the packet header.

That the first device performs the confidentiality encryption on the packet header of the to-be-sent packet according to the transport layer security protocol includes: The first device encrypts the packet header of the to-be-sent packet based on a second confidentiality protection algorithm and a second confidentiality protection key. The second confidentiality protection algorithm is a confidentiality protection algorithm defined by the transport layer security protocol. If the transport layer security protocol defines a plurality of confidentiality protection algorithms, the first device and the second device may negotiate a used second confidentiality protection algorithm. For example, the first device and the second device negotiate the used second confidentiality protection algorithm according to the following steps: Step 1: The first device sends, to the second device, at least one confidentiality protection algorithm supported by the first device. Step 2: The second device selects, from the at least one confidentiality protection algorithm supported by the first device, a confidentiality protection algorithm supported by the second device, and uses the selected confidentiality protection algorithm as the second confidentiality protection algorithm. Step 3: The second device sends a second confidentiality protection algorithm to the first device. The second confidentiality protection key is a confidentiality protection key defined by the Transport Layer Security Protocol. The second confidentiality protection key is a preconfigured key, or a key generated by the first device and the second device through negotiation. For example, if the first device encrypts the packet header of the to-be-sent packet according to the MACSec protocol, the first device and the second device may negotiate the second confidentiality protection key according to the MKA protocol. Specifically, the first device and the second device discover, according to the MKA protocol, that both the first device and the second device have a same CAK. Then, the first device and the second device generate a security association key (security association key, SAK) based on a same key algorithm, the same CAK, and a same random number. The SAK is the second confidentiality protection key.

Alternatively, when performing the confidentiality encryption on the packet header according to the transport layer security protocol, the first device may perform the confidentiality encryption on the packet header, or may perform the confidentiality encryption on a part of the packet header other than the first ICV.

Alternatively, the to-be-sent packet further includes second data. For example, the second data includes control data, management plane data, or synchronization clock data transmitted on a fronthaul interface. Alternatively, the second data includes control data, management plane data, or synchronization clock data that is transmitted on a midhaul interface. Alternatively, the second data includes control data, management plane data, or synchronization clock data that is transmitted on a backhaul interface. For example, the second data includes one or more of the following: operation administration and maintenance (operation administration and maintenance, OAM) data sent by the control device to the radio frequency device, synchronization clock data sent by the control device to the radio frequency device, and control and management (control and management, C&M) data sent by the control device to the radio frequency device.

Further, if the to-be-sent packet further includes the second data, the method 200 further includes: The first device encrypts the second data according to the transport layer security protocol to obtain the encrypted data.

Similar to a manner in which the first device encrypts the packet header of the to-be-sent packet, that the first device encrypts the second data includes: The first device performs confidentiality encryption and/or integrity protection on the second data according to the transport layer security protocol. That the first device performs the confidentiality encryption on the second data according to the transport layer security protocol includes: The first device encrypts the second data based on the second confidentiality protection algorithm and the second confidentiality protection key. The first device performs the integrity protection on the second data according to the transport layer security protocol includes: The first device performs the integrity protection on the second data based on the second integrity protection algorithm and the second integrity protection key.

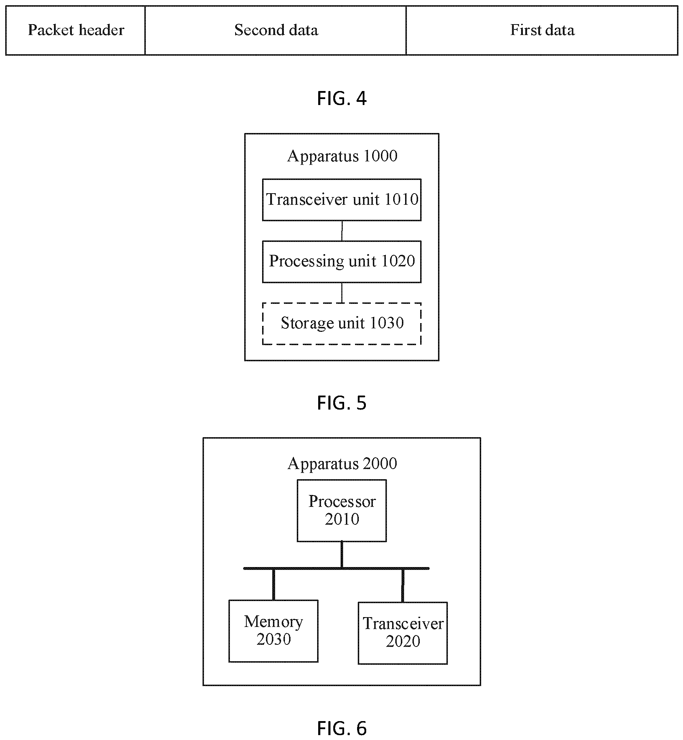

Alternatively, the second data included in the to-be-sent packet is located before the first data. For example, a packet format of the to-be-sent packet is shown in FIG. 4.

Alternatively, if the second data is located before the first data, in S210, the first device simultaneously encrypts the packet header and the second data of the to-be-sent packet according to the transport layer security protocol. For example, that the first device simultaneously performs the integrity protection on the packet header and the second data based on the second integrity protection algorithm and the second integrity protection key includes: The first device calculates a second ICV based on the second integrity protection algorithm, the second integrity protection key, the packet header, and the second data, and places the second ICV at a tail of the second data.

Alternatively, if the to-be-sent packet includes the second data but does not include the first data, the first device encrypts the entire to-be-sent packet according to the transport layer security transport protocol.

Alternatively, the first device may further perform a CRC check on the to-be-sent packet. To be specific, the first device generates a CRC sequence based on data included in the to-be-sent packet, and places the CRC sequence after the data included in the to-be-sent packet. The data included in the to-be-sent packet is the first data and/or the second data.

Alternatively, the first device does not perform the CRC check on the to-be-sent packet.

Alternatively, before S210, the method 200 further includes S240a and S250a.

S240a. The first device receives a second encrypted packet from the second device. Correspondingly, in S240a, the second device sends the second encrypted packet to the first device.

The second encrypted packet is a packet encrypted by the transport layer security protocol. For example, the second encrypted packet is a packet on which the confidentiality encryption and the integrity protection according to the transport layer security protocol are performed. For another example, the second encrypted packet is a packet on which the integrity protection according to the transport layer security protocol is performed.

S250a. The first device performs an integrity check on the second encrypted packet according to the transport layer security protocol, where the check fails.

In S250a, if the first device determines that the integrity check performed on the second encrypted packet fails, the method 200 performs S210.

For example, if the second encrypted packet is data on which the confidentiality encryption and the integrity protection are performed, after receiving the second encrypted packet, the first device first decrypts the second encrypted packet based on the second confidentiality protection algorithm and the second confidentiality protection key. Then, the first device obtains an ICV' through calculation based on the second integrity protection algorithm, the second integrity protection key, and a part of the decrypted packet other than an ICV. If the ICV' is inconsistent with the ICV in the decrypted packet, the first device determines that the integrity check on the second encrypted packet fails.

For another example, if the second encrypted packet is a packet on which the integrity protection is performed, after receiving the second encrypted packet, the first device calculates an ICV' based on the second integrity protection algorithm, the second integrity protection key, and a part of the second encrypted packet other than an ICV. If the ICV' is inconsistent with the ICV in the second encrypted packet, the first device determines that the integrity check on the second encrypted packet fails.

For example, in S250a, that the integrity check performed by the first device on the second encrypted packet fails is the first time the integrity check performed on the packet received from the second device fails. In other words, before the first device receives the second encrypted packet from the second device, the integrity check performed according to the transport layer security protocol by the first device on all encrypted packets received from the second device succeeds. In other words, once the integrity check performed according to the transport layer security protocol by the first device on the encrypted packet received from the second device fails, the first device encrypts the to-be-sent packet in the packet encryption manner described in S210. In other words, the first device encrypts the packet header of the to-be-sent packet according to the transport layer security protocol to obtain the encrypted packet header.

For another example, in S250a, that the integrity check performed by the first device on the second encrypted packet fails is an N^{th} time the integrity check performed on the packet received from the second device fails, where N is a positive integer, and N is a preset threshold. In other words, the integrity check performed according to the transport layer security protocol by the first device on the encrypted packet received from the second device reaches the preset threshold. To be specific, once a quantity of times that the integrity check performed according to the transport layer security protocol by the first device on the encrypted packet received from the second device reaches the preset threshold, the first device encrypts the to-be-sent packet in the packet encryption manner described in S210. In other words, the first device encrypts the packet header of the to-be-sent packet according to the transport layer security protocol to obtain the encrypted packet header.

Alternatively, before S210, the method 200 further includes S240b and S250b.

S240b. The first device sends a third encrypted packet to the second device. Correspondingly, in S240b, the second device receives the third encrypted packet from the first device.

The third encrypted packet is a packet encrypted by the transport layer security protocol. For example, the third encrypted packet is a packet on which the confidentiality encryption and the integrity protection according to the transport layer security protocol are performed. For another example, the third encrypted packet is a packet on which the integrity protection according to the transport layer security protocol is performed.

S250b. The second device sends indication information to the first device. Correspondingly, in S250b, the first device receives the indication information from the second device.

The indication information indicates that the integrity check on the third encrypted packet fails. In S250b, if the first device receives the indication information from the second device, the method 200 performs S210.

After receiving the third encrypted packet from the first device, the second device performs the integrity check on the third encrypted packet according to the transport layer security protocol. If the integrity check performed according to the transport layer security protocol by the second device on the third encrypted packet fails, the second device sends the indication information to the first device.

For example, if the third encrypted packet is data on which the confidentiality encryption and the integrity protection are performed, after receiving the third encrypted packet, the second device first decrypts the third encrypted packet based on the second confidentiality protection algorithm and the second confidentiality protection key. Then, the second device obtains an ICV' through calculation based on the second integrity protection algorithm, the second integrity protection key, and a part of the decrypted packet other than an ICV. If the ICV' is inconsistent with the ICV in the decrypted packet, the second device determines that the integrity check on the third encrypted packet fails.

For another example, if the third encrypted packet is a packet on which the integrity protection is performed, after receiving the third encrypted packet, the second device calculates an ICV' based on the second integrity protection algorithm, the second integrity protection key, and a part of the third encrypted packet other than an ICV. If the ICV' is inconsistent with the ICV in the third encrypted packet, the second device determines that the integrity check on the third encrypted packet fails.

For example, in S250a, the first device receives the indication information from the second device for the first time. In other words, once the first device receives the indication information from the second device, the first device encrypts the to-be-sent packet in the packet encryption manner described in S210, in other words, the first device encrypts the packet header of the to-be-sent packet according to the transport layer security protocol to obtain the encrypted packet header.

For another example, in S250a, the first device receives the indication information from the second device for the N^{th} time, where N is a positive integer, and N is a preset threshold. In other words, once a quantity of times that the first device receives the indication information from the second device reaches the preset threshold, the first device encrypts the to-be-sent packet in the packet encryption manner described in S210, in other words, the first device encrypts the packet header of the to-be-sent packet according to the transport layer security protocol to obtain the encrypted packet header.

S220. The first device sends a first encrypted packet to the second device. Correspondingly, in S220, the second device receives the first encrypted packet from the first device.

The first encrypted packet includes the encrypted packet header and the first data. In other words, after generating the to-be-sent packet, the first device obtains the first encrypted packet after encrypting the packet header of the to-be-sent packet according to the transport layer security protocol, and sends the first encrypted packet to the second device.

Alternatively, the method 200 further includes: The first device sends, to the second device, length information (that is, first length information) of the packet header of the to-be-sent packet. The length information of the packet header is used to determine a length of the packet header.

Alternatively, before the first device sends the first encrypted packet to the second device, the first device sends the first length information to the second device.

As described above, in a process of generating the to-be-sent packet, the first device may add a service type field before the first data based on a service type of the first data. It should be understood that, for different service types, lengths of service type fields may be different. As a result, lengths of packet headers may be different. Therefore, to enable the second device to correctly decrypt the first encrypted packet, the first device may send the length information of the packet header to the second device.

Alternatively, the method 200 further includes: The first device sends service type information to the second device, where the service type information indicates the service type of the first data. The service type of the first data is used to determine the length of the packet header of the to-be-sent packet.

Alternatively, if the to-be-sent packet includes the second data, the first encrypted packet includes the encrypted packet header, the encrypted data, and the first data. In other words, after generating the to-be-sent packet, the first device obtains the first encrypted packet after encrypting the packet header of the to-be-sent packet and the second data according to the transport layer security protocol, and sends the first encrypted packet to the second device.

Alternatively, when the to-be-sent packet includes the second data, the method 200 further includes: The first device sends length information (that is, second length information) of the second data to the second device. The length information of the second data is used to determine a length of the second data.

Alternatively, before the first device sends the first encrypted packet to the second device, the first device sends the second length information to the second device.

Alternatively, if the first device performs a CRC check on the to-be-sent packet, the first encrypted packet further includes a CRC sequence.

5230. The second device decrypts, according to the transport layer security protocol, the encrypted packet header included in the first encrypted packet.

For example, in S210, if the first device performs the confidentiality encryption and the integrity protection on the packet header of the to-be-sent packet according to the transport layer security protocol, in S230, the second device first decrypts the encrypted packet header based on the second confidentiality protection algorithm and the second confidentiality protection key to obtain the packet header. Then the second device obtains a first ICV' through calculation based on the second integrity protection algorithm, the second integrity protection key, and a part of the packet header other than the first ICV. If the first ICV' is consistent with the first ICV, the second device determines that an integrity check on the encrypted packet header succeeds.

For another example, in S210, if the first device performs the confidentiality encryption on the packet header of the to-be-sent packet according to the transport layer security protocol, in S230, the second device decrypts the encrypted packet header based on the second confidentiality protection algorithm and the second confidentiality protection key to obtain the packet header.

For another example, in S210, if the first device performs the integrity protection on the packet header of the to-be-sent packet according to the transport layer security protocol, in S230, the second device obtains a first ICV' through calculation based on the second integrity protection algorithm, the second integrity protection key, and a part of the encrypted packet header other than the first ICV. If the first ICV' is consistent with the first ICV, the second device determines that an integrity check on the encrypted packet header succeeds.

Alternatively, if the second device receives the first length information from the first device, the second device first determines, based on the first length information, a length of the encrypted packet header before being encrypted. Then the second device decrypts the encrypted packet header based on the length of the encrypted packet header before being encrypted. For example, the second device calculates the length of the encrypted packet header based on the second confidentiality protection algorithm, the second confidentiality protection key, and the first length information. Further, the second device locates the encrypted packet header in the first encrypted packet based on the calculated length of the encrypted packet header. Further, the second device decrypts the encrypted packet header.

Alternatively, if the first encrypted packet further includes the encrypted data, in S230, the second device further decrypts the encrypted data according to the transport layer security protocol to obtain the second data. A manner in which the second device decrypts the encrypted data is the same as a manner in which the second device decrypts the encrypted packet header. For brevity, details are not described herein again.

Alternatively, if the second device receives the second length information from the first device, the second device first determines, based on the second length information, a length of the encrypted data before being encrypted. Then the second device decrypts the encrypted data based on the length of the encrypted data before being encrypted. For example, the second device calculates the length of the encrypted data based on the second confidentiality protection algorithm, the second confidentiality protection key, and the second length information. Further, the second device locates the encrypted data in the first encrypted packet based on the calculated length of the encrypted data. Further, the second device decrypts the encrypted packet.

Alternatively, if the first encrypted packet further includes a CRC check code, the second device further performs a CRC check on the first encrypted packet based on the CRC check code. If the first encrypted packet does not include the CRC check code, the second device does not perform the CRC check on the first encrypted packet.

Alternatively, if the second device successfully decrypts the encrypted packet header, the second device sends the first data to a fourth device. The fourth device is a destination device that transmits data or a routing device that connects the destination device and a source device in the Ethernet. Alternatively, the fourth device is a terminal device or a core network device. For example, the second device is a radio frequency device, and the fourth device is a terminal device. Alternatively, the second device is a control device, and the fourth device is a core network device.

Alternatively, if the first data is data sent to the terminal device, in a process of transmitting the first data from the first device to the second device, if an error occurs on the first data, the terminal device corrects the first data after receiving the first data. For example, the terminal device corrects the first data based on a Turbo code, a polar (polar) code, or an LDPC code.

Alternatively, if the first data is data sent by the terminal device to the control device or the core network device, in a process of transmitting the first data from the first device to the second device, if an error occurs on the first data, the control device or the core network device corrects the first data after receiving the first data. For example, the control device or the core network device corrects the first data based on a Turbo code, a polar code, or an LDPC code.

In embodiments of this application, if the to-be-sent packet includes the first data encrypted by the application layer security protocol, when encrypting the to-be-sent packet according to the transport layer security protocol, the first device encrypts the packet header of the to-be-sent packet, but does not encrypt the first data. Correspondingly, after receiving the encrypted packet, the second device decrypts the encrypted packet header included in the encrypted packet, but does not decrypt the first data. Therefore, processing load of the first device and the second device can be reduced, chip costs and power consumption of the first device and the second device can be reduced, and the packet transmission efficiency can be improved.

Because the first data is data encrypted by the application layer security protocol, even if the first device does not encrypt the first data, secure transmission of the first data between the first device and the second device can be ensured. In addition, because the packet header of the to-be-sent packet is not encrypted, after the first device encrypts the packet header according to the transport layer security protocol, secure transmission of the packet header between the first device and the second device can be ensured.

In addition, because the packet header occupies a small proportion in the entire to-be-sent packet, the encrypted packet header occupies a small proportion in the first encrypted packet. Further, because the length of the encrypted packet header is short, the encrypted packet header is less error-prone during transmission, and further it is less likely that the second device fails to decrypt the encrypted packet header according to the transport layer security protocol. Therefore, a probability that the second device discards the first data because decrypting or performing integrity check on the packet header fails is also reduced. Therefore, according to the foregoing technical solution, an error resilience capability of a link between the first device and the second device can be improved if secure transmission is ensured. If the first data is air interface data, spectrum utilization of an air interface can be improved when a probability of discarding the first data decreases.

In addition, when the first device determines that the integrity check on the second encrypted packet fails or receives the indication information, the secure transmission method provided in embodiments of this application is used, so that there is no need to replace hardware of the first device and/or the second device, and the error resilience capability of the link between the first device and the second device is improved. For example, when the first device and the second device are connected by an optical fiber link, if the integrity check on the encrypted packet transmitted between the first device and the second device fails, the following problems may occur: Power of an optical module deployed on the first device and/or the second device deteriorates, an optical signal is attenuated because of a remote optical fiber between the first device and the second device, and optical fiber splice results an insertion loss. In this case, the secure transmission method provided in embodiments of this application is used, even if the optical module of the first device and the optical module or the optical fiber of the second device are not replaced, the error resilience capability of the link between the first device and the second device can be improved.

The method provided in embodiments of this application is described above in detail with reference to FIG. 2 to FIG. 4. The apparatuses provided in embodiments of this application are described following in detail with reference to FIG. 5 to FIG. 7. It should be understood that descriptions of apparatus embodiments correspond to the descriptions of the method embodiments. Therefore, for content that is not described in detail, refer to the foregoing method embodiments. For brevity, details are not described herein again.

FIG. 5 is a schematic block diagram of an apparatus 1000 according to an embodiment of this application. As shown in the figure, the apparatus 1000 may include: a transceiver unit 1010 and a processing unit 1020.

In a possible design, the apparatus 1000 may be the first device in the foregoing method embodiments, or may be a chip configured to implement a function of the first device in the foregoing method embodiments.

It should be understood that the apparatus 1000 may be corresponding to the first device in the method 200 according to embodiments of this application, and the apparatus 1000 may include units configured to perform the method performed by the first device included by the method 200 in FIG. 2. In addition, units in the apparatus 1000 and the foregoing other operations and/or functions are separately used to implement corresponding procedures of the method 200 in FIG. 2. It should be further understood that a specific process in which the units perform the foregoing corresponding steps is described in detail in the foregoing method embodiments, and for brevity, details are not described herein.

In another possible design, the apparatus 1000 may be the second device in the foregoing method embodiments, or may be a chip configured to implement a function of the second device in the foregoing method embodiments.

It should be understood that the apparatus 1000 may be corresponding to the second device in the method 200 according to embodiments of this application, and the apparatus 1000 may include units configured to perform the method performed by the second device included by the method 200 in FIG. 2. In addition, units in the apparatus 1000 and the foregoing other operations and/or functions are separately used to implement corresponding procedures of the method 200 in FIG. 2. It should be further understood that a specific process in which the units perform the foregoing corresponding steps is described in detail in the foregoing method embodiments, and for brevity, details are not described herein.

It should be further understood that the transceiver unit 1010 in the apparatus 1000 may correspond to a transceiver 2020 in an apparatus 2000 shown in FIG. 6, and the processing unit 1020 in the apparatus 1000 may correspond to a processor 2010 in the apparatus 2000 shown in FIG. 6.

It should be further understood that when the apparatus 1000 is a chip, the chip includes a transceiver unit and a processing unit. The transceiver unit may be an input/output circuit or a communication interface. The processing unit may be a processor, a microprocessor, or an integrated circuit integrated on the chip.

The transceiver unit 1010 is configured to implement a signal receiving and sending operation of the apparatus 1000, and the processing unit 1020 is configured to implement a signal processing operation of the apparatus 1000.

Alternatively, the apparatus 1000 further includes a storage unit 1030. The storage unit 1030 is configured to store instructions.

FIG. 6 is a schematic block diagram of the apparatus 2000 according to an embodiment of this application. As shown in FIG. 6, the apparatus 2000 includes: at least one processor 2010 and a transceiver 2020. The processor 2010 is coupled to a memory, and is configured to execute instructions stored in the memory, to control the transceiver 2020 to send a signal and/or receive a signal. Alternatively, the apparatus 2000 further includes a memory 2030 that is configured to store the instructions.

It should be understood that the processor 2010 and the memory 2030 may be combined into one processing apparatus, and the processor 2010 is configured to execute program code stored in the memory 2030 to implement the foregoing functions. During specific implementation, the memory 2030 may be integrated into the processor 2010, or may be independent of the processor 2010.

It should be further understood that the transceiver 2020 may include a receiver (or referred to as a receiver) and a transmitter (or referred to as a transmitter). The transceiver 2020 may further include one or more antennas. The transceiver 2020 may further be a communication interface or an interface circuit.

When the apparatus 2000 is a chip, the chip includes a transceiver unit and a processing unit. The transceiver unit may be an input/output circuit or a communication interface. The processing unit may be a processor, a microprocessor, or an integrated circuit integrated on the chip.

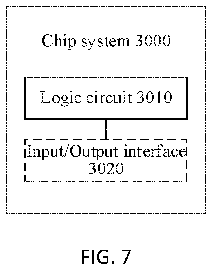

FIG. 7 is a schematic diagram of a chip system according to an embodiment of this application. The chip system herein may also be a system composed of circuits. The chip system 3000 shown in FIG. 7 includes: a logic circuit 3010 and an input/output interface (input/output interface) 3020, where the logic circuit is configured to be coupled to the input interface, and transmit data (for example, first indication information) by using the input/output interface, to perform the method in FIG. 2.

Embodiments of this application further provide a processing apparatus, including a processor and an interface. The processor may be configured to perform the method in the foregoing method embodiments.

It should be understood that the foregoing processing apparatus may be a chip. For example, the processing apparatus may be a field programmable gate array (field programmable gate array, FPGA), an application specific integrated chip (application specific integrated circuit, ASIC), a system on chip (system on chip, SoC), a central processing unit (central processing unit, CPU), a network processor (network processor, NP), a digital signal processor (digital signal processor, DSP) circuit, a micro controller unit (micro controller unit, MCU), a programmable controller (programmable logic device, PLD), or another integrated chip.

In an implementation process, the steps in the foregoing methods may be completed by an integrated logical circuit of hardware in the processor or instructions in a form of software. The steps of the methods disclosed with reference to embodiments of this application may be directly performed and completed by a hardware processor, or may be performed and completed by a combination of hardware and software modules in a processor. A software module may be located in a mature storage medium in the art, such as a random access memory, a flash memory, a read-only memory, a programmable read-only memory, an electrically erasable programmable memory, a register, or the like. The storage medium is located in the memory, and a processor reads information in the memory and completes the steps in the foregoing methods in combination with hardware of the processor. To avoid repetition, details are not described herein again.

It should be noted that the processor in embodiments of this application may be an integrated circuit chip, and has a signal processing capability. In an implementation process, the steps in the foregoing method embodiments may be completed by the integrated logic circuit of the hardware in the processor or the instructions in the form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

According to the method provided in embodiments of this application, this application further provides a computer program product. The computer program product includes: computer program code. When the computer program code runs on a computer, the computer performs the method in the embodiment shown in FIG. 2.

According to the method provided in embodiments of this application, this application further provides a computer-readable medium. The computer-readable medium stores program code. When the program code runs on a computer, the computer is enabled to perform the method in the embodiment shown in FIG. 2.

According to the method provided in embodiments of this application, this application further provides a system, including the foregoing first device and the second device.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer instructions may be stored in a computer-readable storage medium, or transmitted from one computer-readable storage medium to another computer-readable storage medium. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

In the several embodiments provided in this application, it should be understood that the disclosed systems, apparatuses, and methods may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A secure transmission method, comprising
encrypting, by a first device, a packet header of a to-be-sent packet according to a transport layer security protocol to obtain an encrypted packet header, wherein the to-be-sent packet comprises first data, and the first data is encrypted by an application layer security protocol but is not encrypted by the transport layer security protocol; and
sending, by the first device, a first encrypted packet to a second device, wherein the first encrypted packet comprises the encrypted packet header and the first data.

2. The method according to claim 1, wherein the application layer security protocol comprises: a packet data convergence protocol PDCP layer protocol.

3. The method according to claim 1 or 2, wherein the transport layer security protocol comprises a media access control security protocol or an internet protocol security protocol.

4. The method according to any one of claims 1 to 3, wherein the method further comprises:
sending, by the first device, length information of the packet header of the to-be-sent packet to the second device.

5. The method according to any one of claims 1 to 4, wherein the to-be-sent packet further comprises second data that is not encrypted by the application layer security protocol, the first encrypted packet further comprises encrypted data, and the method further comprises:
encrypting, by the first device, the second data according to the transport layer security protocol to obtain the encrypted data.

6. The method according to claim 5, wherein the second data is located before the first data.

7. The method according to claim 5 or 6, wherein the method further comprises:
sending, by the first device, length information of the second data to the second device.

8. The method according to any one of claims 5 to 7, wherein the second data comprises control data, management plane data, or synchronization clock data transmitted on a fronthaul interface.

9. The method according to any one of claims 1 to 8, wherein the first data is air interface data.

10. The method according to any one of claims 1 to 9, wherein before the first encrypted packet is generated, the method further comprises:
receiving, by the first device, a second encrypted packet from the second device; and
performing, by the first device, an integrity check on the second encrypted packet according to the transport layer security protocol, wherein the check fails.

11. The method according to any one of claims 1 to 10, wherein before the first encrypted packet is generated, the method further comprises:
sending, by the first device, a third encrypted packet to the second device, wherein the third encrypted packet is generated by encrypting the to-be-sent packet according to the transport layer security protocol; and
receiving, by the first device, indication information from the second device, wherein the indication information indicates that the integrity check on the third encrypted packet fails.

12. The method according to any one of claims 1 to 11, wherein the first device is a source device for packet transmission or a routing device that connects the source device and a destination device in Ethernet, the destination device is a destination device for packet transmission in the Ethernet, and the second device is the destination device or a routing device that connects the source device and the destination device.

13. A secure transmission method, comprising
receiving, by a second device, an encrypted packet from a first device, wherein the encrypted packet comprises an encrypted packet header and first data, and the first data is encrypted by an application layer security protocol but is not encrypted by a transport layer security protocol; and
decrypting, by the second device, the encrypted packet header according to the transport layer security protocol.

14. The method according to claim 13, wherein the application layer security protocol comprises a packet data convergence protocol PDCP layer protocol.

15. The method according to claim 13 or 14, wherein the transport layer security protocol comprises a media access control security protocol or an internet protocol security protocol.

16. The method according to any one of claims 13 to 15, wherein the method further comprises:
receiving, by the second device, first length information from the first device; and
determining, by the second device based on the first length information, a length of the encrypted packet header before being encrypted.

17. The method according to any one of claims 13 to 16, wherein the encrypted packet further comprises encrypted data, and the method further comprises:
decrypting, by the second device, the encrypted data according to the transport layer security protocol to obtain second data.

18. The method according to claim 17, wherein the method further comprises:
receiving, by the second device, second length information from the first device; and
determining, by the second device based on the second length information, a length of the second encrypted data before being encrypted.

19. The method according to claim 17 or 18, wherein the second data comprises control data, management plane data, or synchronization clock data transmitted on a fronthaul interface.

20. The method according to any one of claims 13 to 19, wherein first data is air interface data.

21. The method according to any one of claims 13 to 20, wherein the first device is a source device for packet transmission or a routing device that connects the source device and a destination device in Ethernet, and the second device is the destination device or a routing device that connects the source device and the destination device.

22. An apparatus, comprising at least one processor, wherein the at least one processor is coupled to at least one memory, and the at least one processor is configured to execute a computer program or instructions stored in the at least one memory, so that the apparatus performs the method according to any one of claims 1 to 12.

23. An apparatus, comprising at least one processor, wherein the at least one processor is coupled to at least one memory, and the at least one processor is configured to execute a computer program or instructions stored in the at least one memory, so that the apparatus performs the method according to any one of claims 13 to 21.

24. A computer-readable storage medium, wherein the computer-readable storage medium stores a computer program, and when the computer program is executed, the method according to any one of claims 1 to 21 is performed.

25. A system, comprising the apparatuses according to claim 22 and 23.
